# EUROPÄISCHE PATENTSCHRIFT

(11) **EP 0 362 546 B1**
(45) Veröffentlichungstag und Bekanntmachung des Hinweises auf die Patenterteilung: **03.08.1994**
(21) Anmeldenummer: 89115812.3
(22) Anmeldetag: 28.08.1989
(51) Int. Cl.: F16D 65/84, F16D 65/16

(54) **Teilbelag-Scheibenbremse**
Spot-type disc brake
Frein à disque à garniture partielle

(30) Priorität: 05.10.1988 DE 3833766
(43) Veröffentlichungstag der Anmeldung: 11.04.1990
(73) Patentinhaber: ITT Automotive Europe GmbH, 60488 Frankfurt (DE)
(72) Erfinder: Thiel, Rudolf, D-6000 Frankfurt/Main 90 (DE); Klimt, Ulrich, D-6114 Gross-Umstadt (DE); Kast, Helmut, D-6000 Frankfurt/Main (DE)

(56) Entgegenhaltungen:
- EP-A- 0 108 663
- EP-A- 0 178 449
- DE-A- 3 143 165
- DE-A- 3 604 613
- DE-C- 3 144 868
- US-A- 4 596 317

## Beschreibung

Die Erfindung betrifft eine Teilbelag-Scheibenbremse gemäß dem Oberbegriff des Anspruchs 1.

Aus der DE-A-3 604 613 ist eine hydraulisch betätigte Bremsvorrichtung mit einem auf einer Kolbenmantelfläche montierbaren Metallring bekannt. Um einen festen Sitz des Metallringes auf dem Kolben zu bewirken, sind am inneren Umfang des Metallringes verteilte, an federnden, axial aus der Radialebene herausgeklappten Ringelementen nach innen weisende Vorsprünge und ebenfalls am inneren Umfang verteilte Führungsflächen zur Befestigung des Metallringes am Kolben in einer definierten Lage vorgesehen. Für die axiale Länge der Ringelemente und der Führungsflächen ist nachteilig ein vergrößerter axialer Einbauraum an dem Kolben vorzusehen.

Aus der EP-A-0 108 663 ist ein gattungsgemäßes Schutzschild für eine Bremseinheit bekannt. Ein innerer Abschnitt des Schildes weist einen mit einer Außenfläche des Kolben in Eingriff stehenden Greifrand auf, um das Hitzeschild am Kolben zu fixieren. Da das Hitzeschild den Kolben mit seinem Greifrand über den gesamten Umfang umgreift, kann sich bei thermischer Belastung nachteilig das Hitzeschild so weit aufdehnen, daß es vom Kolben rutscht oder der Kolben sich so weit aufdehnen, daß er das Hitzeschild an dessen Greifrand auseinanderreißt.

Aus der DE-C-3 144 868 ist eine gattungsgemäße Scheibenbremse mit einem Schutzschild bekannt, von dessen inneren Umfang aus mehrere Vorsprünge radial nach innen ragen. Zur Erhöhung der Elastizität besitzt das Schutzschild weiterhin noch radial verlaufende Schlitze, die die Seitenkanten der Vorsprünge verlängernd sich radial nach außen in das Schutzschild erstrecken. Die bekannte Lösung hat den Nachteil, daß die Passungen hinsichtlich der Vorsprünge sowie der Oberfläche für den Bremskolben, insbesondere die Aufnahmenut sehr genau aufgeführt sein müssen. Sind nämlich die Vorsprünge zu lang, so bereitet es Schwierigkeiten, das Schutzschild über den Kolben zu ziehen. Hinzu kommt, daß in diesem Fall das Schutzschild geneigt gegenüber dem Kolben stehen kann. Weiterhin kann es dabei zu dauerhaften Verbiegungen der Vorsprünge kommen, so daß diese nicht mehr genau in die Nut ragen. Sind andererseits die Vorsprünge zu kurz, so hält das Blech nicht fest in der Nut und kann aus dieser herausfallen. Entsprechende Überlegungen treffen hinsichtlich der Nuttiefe zu.

Der Erfindung liegt daher die Aufgabe zugrunde, ein Schutzschild der sich aus dem Oberbegriff des Hauptanspruchs ergebenden Gattung mit minimalem axialem Einbauraum sicher an einem Kolben zu befestigen.

Die Aufgabe wird durch die Merkmalskombination des kennzeichnenden Teils des Hauptanspruches gelöst. Der Vorteil der Erfindung besteht darin, daß das Schutzschild über den Vorsprüngen sich in Umfangsrichtung erstreckende Öffnungen bzw. Langlöcher aufweist, deren Abstand vorzugsweise zu der radial inneren Umfangsfläche kleiner als der Abstand zu der radial äußeren Umfangsfläche des Schutzschildes ist. Damit sind sich in Umfangsrichtung und unter den Öffnungen erstreckende Stege ausgebildet, in deren Mitte sich der Vorsprung radial nach innen erstreckt. Diese Stege sind verwindbar, so daß, ohne den Rest des Schutzschildes zu verformen, an den Vorsprüngen eine Torsionsfederkraft wirken kann. Der Steg kann vorteilhafterweise zwei Beanspruchungsarten aufnehmen, nämlich zum einen die Torsion bei der Montage und zum anderen die Biegung im Betriebszustand.

In einer einfachen Ausgestaltung der Erfindung sind drei Vorsprünge gleichmäßig an der inneren Umfangsfäche über dem Umfang verteilt angeordnet.

In einer vorteilhaften Ausführungsform weist das Schutzschild einen ersten äußeren Abschnitt auf, der abgewinkelt zu einem zweiten Abschnitt angeordnet ist und bei Belagmontage in das Gehäuse ragt, so daß der Bremsbelag an dem Gehäuse und dem Schutzschild ohne zu verhaken entlanggleiten kann. Dieser erste Abschnitt dient zur Versteifung und zur besseren Belagmontage, vergrößert jedoch nicht die axiale Baulänge, da dieser Abschnitt über die Faltmanschette greift.

Um einer fertigungstechnisch bedingten Wellenbildung auf dem ersten Abschnitt vorzubeugen, sind vorteilhafterweise radial nach außen offene Schlitze in dem Schutzschild angeordnet.

In vorteilhafter Weise weist der Kolben an seiner äußeren Kolbenmantelfläche eine umlaufende Nut auf, in der die Vorsprünge einrasten. Wenn die Vorsprünge eingerastet sind, nimmt das Schutzschild eine genau definierte Lage zum Kolben und damit zum Gehäuse der Teilbelagscheibenbremse ein.

In einer vorteilhaften Ausführungsform weisen die sich radial erstreckenden umlaufenden Nutflächen einen unterschiedlichen Außendurchmesser mit dem größeren Außendurchmesser an der dem Gehäuse zugewandten Seite auf, so daß das Schutzblech zwar von der Befestigungsseite her leicht, aber nicht weiter als bis zu der als Anschlag dienenden größeren Nutfläche auf den Kolben aufschiebbar ist.

Als Alternative zu der Nut ist in einer vorteilhaften Ausführungsform einzig ein Absatz in axialer Richtung vorgesehen, über den hinaus das Schutzschild nicht mehr in axialer Richtung auf den Kolben hinaufgeschoben werden kann. Schutz gesucht wird auch für das Schutzschild an sich.

In vorteilhafter Weise ist das Schutzschild ein einfaches Stanz- oder Biegeteil aus ca. 0,4 mm dickem rostfreiem Stahlblech (Federstahl o.ä.).

Nachfolgend ist ein vorteilhaftes Ausführungsbeispiel der Erfindung anhand der Zeichnungen näher erläutert.

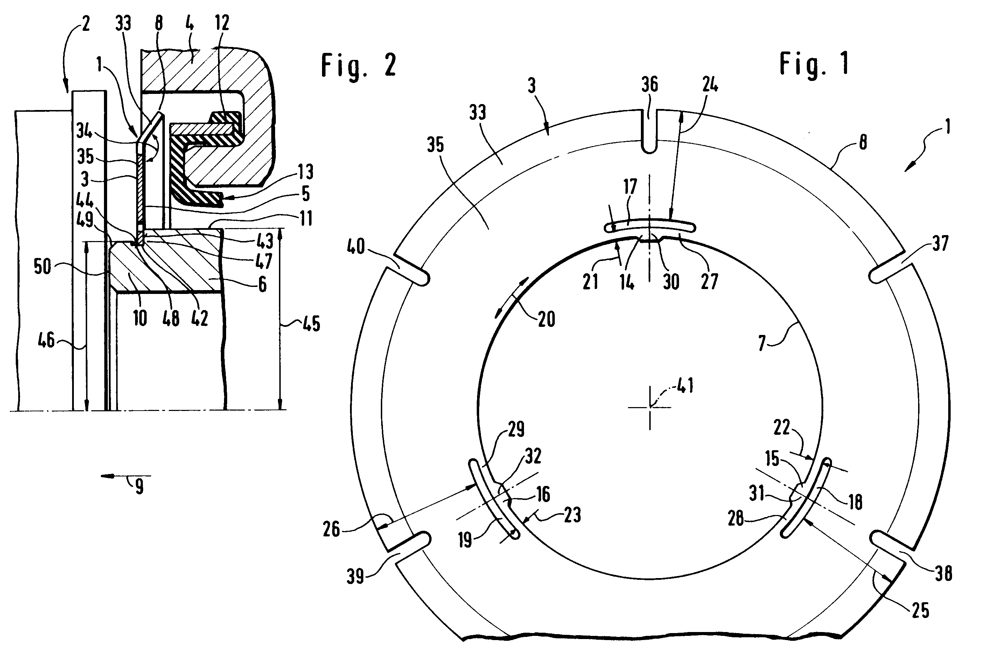

Es zeigen
- Fig. 1: das Schutzschild, und
- Fig. 2: in Schnittdarstellung das Schutzschild auf einem Kolben einer Teilbelag-Scheibenbremse montiert.

Die Figuren zeigen ein scheibenförmig ausgebildetes Schutzschild 1 mit einer einem Bremsbelag 2 zugewandten Stirnfläche 3 und einer dem Bremsbelag 2 abgewandten, einem Gehäuse 4 zugewandten Stirnfläche 5. Des weiteren weist das Schutzschild 1 eine radial innere, einem Kolben 6 zugewandte Umfangsfläche 7 und eine radial äußere Umfangsfläche 8 auf. Der Kolben 6 weist ein in Betätigungsrichtung 9 weisendes, aus dem Gehäuse 4 hervorstehendes und an dem Bremsbelag 2 angreifendes Ende 10 auf. Das Schutzschild 1 ist auf einer äußeren Kolbenmantelfläche 11 des Kolbens 6 angeordnet. Ein Endabschnitt 12 einer elastischen Faltmanschette 13 ist an dem Gehäuse 4 und ein zweiter, nicht dargestellter Endabschnitt der elastischen Faltmanschette 13 ist in einer nicht dargestellten Nut in der äußeren Kolbenmantelfläche 11 des Kolbens 6 angeordnet. Das Schutzschild 1 weist an der inneren Umfangsfläche 7 radial nach innen ragende Vorsprünge 14,15 und 16 auf, mit denen das Schutzschild 1 auf der Kolbenmantelfläche 11 des Kolbens 6 verklemmbar ist. Radial außen über den Vorsprüngen 14,15,16 sind Öffnungen 17,18,19 in Form von sich in Umfangsrichtung 20 erstreckenden Langlöchern 17,18,19 angeordnet. Die Öffnungen 17,18,19 weisen einen geringen Abstand 21,22,23 zu der inneren Mantelfläche 7 und einen großen Abstand 24,25,26 zu der äußeren Mantelfläche 8 auf. Damit werden zwischen den Öffnungen 17,18,19 und der inneren Mantelfläche 7 Stege 27,28 und 29 ausgebildet, in deren Mitte 30,31,32 die Vorsprünge 14,15,16 angeordnet sind. Die Stege 27 bis 29 lassen sich bei der Montage verdrehen und wirken als Federn. Bei maßlicher Änderung der Nut 42 infolge Wärmeausdehnung wirken die Stege 27,28 und 29 als federnde Biegestäbe, die den sicheren Sitz des Schutzschildes gewährleisten. Das Schutzschild 1 weist einen ersten äußeren Abschnitt 33 auf, der unter einem Winkel 34 zu einem zweiten inneren Abschnitt 35 des Schutzschildes 1 abgebogen ist und in das Innere des Gehäuses 4 ragt. Das Schutzschild 1 weist sich bis in den Abschnitt 35 erstreckende radiale Schlitze 36,37,38,39 und 40 auf, die sich radial von der äußeren Mantelfäche 8 in Richtung einer Schutzschildmitte 41 erstrecken. Der Kolben 6 weist an der äußeren Mantelfläche 11 eine Nut 42 auf, in der die Vorsprünge 14,15,16 einrastbar sind. Die Nut 42 wird von zwei sich radial erstreckenden umlaufenden Nutflächen 43,44 begrenzt. Die von dem Bremsbelag 2 weiter entfernt liegende Nutfläche 43 weist einen äußeren Durchmesser 45 und die dem Bremsbelag 2 näher liegende Nutfläche einen äußeren Durchmesser 46 auf. Der Durchmesser 46 ist kleiner als der Durchmesser 45.

In einer nicht dargestellten Ausführungsform der Erfindung ist nur ein Absatz 47 mit der Nutfläche 43 vorhanden und ein Nutgrund 48 erstreckt sich bis zu einer Fase 49, die eine Kolbenstirnfläche 50 des Kolbens 6 begrenzt.

Das Schutzschild 1 ist ein Wärmeschutzblech 1 für Scheibenbremsen aller Bauarten und verhindert ein Verbrennen der Kolbenschutzkappe 13 infolge Abstrahlungshitze einer Bremsscheibe und der Beläge 2, mit Hilfe eines einfachen, billigen, am Kolbenbund 10 befestigten, axial kurzbauenden und montagefreundlichen Bleches 1, das bei Festsätteln auch wahlweise auf der Flansch- oder Deckelseite verwendet werden kann.

Das Wärmeschutzblech 1 ist ein einfaches Stanz- und Biegeteil aus ca. 0,4 mm dickem, vorzugsweise rostfreiem Stahlblech (Federstahl o.ä.). Eine Abwinkelung 33 am Außendurchmesser dient zur Versteifung und zur besseren Belagmontage, vergrößert jedoch nicht die axiale Baulänge, weil die Abwinkelung über die Schutzkappe 13 greift. Zur Befestigung auf dem Kolben 6 sind im Innenbereich einige Federkrallen 14-16, vorteilhafterweise Vorsprünge 14-16, angeordnet. Die Krallen 14-16 sind Blechvorsprünge 14-16, die mittig auf einem federnden Steg 27-29 sitzen. Die Länge des Federstegs ist dabei so gewählt, daß sich das Schutzblech ohne plastische Verformung auf seinen Sitz clipsen läßt. Der Sitz am Kolben 6 kann grundsätzlich als glatter Absatz ausgeführt sein. Der Verkrallungseffekt reicht aus, das Blech 1 zu halten. Alternativ kann zur besseren Sicherung des Bleches der Kolbensitz mit einer kleinen Nut versehen und somit ein Formschluß erzielt werden. Die Montage kann serienmäßig mit einem Werkzeug oder manuell erfolgen, indem man zwei Krallen 14-16 in die Nut 42 einsetzt und die dritte 14-16 über den Kolbenbund clipst.

Durch einen sehr kleinen Torsionsradius R_{T} und die radiale Aufbiegung der Federstege, schwenken die Befestigungskrallen axial sehr wenig aus. Damit wird eine wesentliche Verkürzung des erforderlichen Kolbenbundes erreicht, was eine Verkleinerung der Einbaulänge der Bremse bewirkt (geringeres Gewicht, kleinerer Einbauraumbedarf am Fahrzeug).

Der Nutgrund 42 weist eine axiale Länge von 0,5 mm und die Mantelfläche 7 eine axiale Länge von 0,4 mm auf. Damit ist eine geringe axiale Einbaulänge von Schutzschild 1 und Kolben 6 erzielt.

### Bezugszeichenliste

- 1: Schutzschild
- 2: Bremsbelag
- 3: Stirnfläche
- 4: Gehäuse
- 5: Stirnfläche
- 6: Kolben
- 7: innere Umfangsfläche
- 8: äußere Umfangsfläche
- 9: Betätigungsrichtung
- 10: Kolbenende
- 11: Kolbenmantelfläche
- 12: Endabschnitt
- 13: Faltmanschette
- 14: Vorsprung
- 15: Vorsprung
- 16: Vorsprung
- 17: Öffnung
- 18: Öffnung
- 19: Öffnung
- 20: Umfangsrichtung
- 21: innerer Abstand
- 22: innerer Abstand
- 23: innerer Abstand
- 24: äußerer Abstand
- 25: äußerer Abstand
- 26: äußerer Abstand
- 27: Steg
- 28: Steg
- 29: Steg
- 30: Mitte
- 31: Mitte
- 32: Mitte
- 33: äußerer Abschnitt
- 34: Winkel
- 35: innerer Abschnitt
- 36: Schlitz
- 37: Schlitz
- 38: Schlitz
- 39: Schlitz
- 40: Schlitz
- 41: Schutzschildmitte
- 42: Nut
- 43: Nutfläche
- 44: Nutfläche
- 45: Durchmesser
- 46: Durchmesser
- 47: Absatz
- 48: Nutgrund
- 49: Fase
- 50: Kolbenstirnfläche

## Patentansprüche

1. Teilbelag-Scheibenbremse mit einem Gehäuse (4) und mindestens einem Kolben (6), an dessen aus dem Gehäuse (4) hervorstehenden und an einem Bremsbelag (2) angreifenden Ende (10) ein Schutzschild (1) an der Kolbenmantelfläche (11) angreift, wobei das Schutzschild (1) scheibenförmig ausgebildet ist und zwei axiale, dem Bremsbelag (2) und dem Gehäuse (4) zugewandte Stirnflächen (3,5) und eine radial innere, dem Kolben (6) zugewandte Umfangsfläche (7) aufweist, wobei ein Endabschnitt einer elastischen Faltmanschette (13) an der Kolbenmantelfläche (11) und ein anderer Endabschnitt (12) am Gehäuse (4) angeordnet ist, und wobei das Schutzschild (1) an der Umfangsfläche (7) einen oder mehrere radial nach innen ragende Vorsprünge (14,15,16) aufweist, mit denen das Schutzschild (1) auf der Kolbenmantelfläche (11) des Kolbens (6) verklemmbar ist, dadurch **gekennzeichnet,** daß das Schutzschild (1) radial außen über dem Vorsprung bzw. den Vorsprüngen (14,15,16) jeweils eine Öffnung (17,18,19) aufweist.

2. Teilbelag-Scheibenbremse nach Anspruch 1, dadurch **gekennzeichnet,** daß die jeweilige Öffnung (17,18,19) ein sich in Umfangsrichtung (20) erstreckendes Langloch (17,18,19) ist, so daß der Vorsprung (14,15,16) an einem in Umfangsrichtung (20) verlaufenden Steg (27,28,29) an einem inneren Umfang des Schutzschildes (1) angeordnet ist.

3. Teilbelag-Scheibenbremse nach Anspruch 1 oder 2, dadurch **gekennzeichnet,** daß die jeweilige Öffnung (17,18,19) einen geringeren Abstand (21,22,23) zu der radial inneren Umfangsfläche (7) als zu einer radial äußeren Umfangsfläche (8) des Schutzschildes (1) aufweist.

4. Teilbelag-Scheibenbremse nach einem der vorhergehenden Ansprüche, dadurch **gekennzeichnet,** daß die Vorsprünge (14,15,16) des Schutzschildes (1) gleichmäßig verteilt am Umfang angeordnet sind.

5. Teilbelag-Scheibenbremse nach einem der vorhergehenden Ansprüche, dadurch **gekennzeichnet,** daß das Schutzschild (1) einen ersten und einen zweiten Abschnitt (33,35) aufweist, die abgewinkelt zueinander angeordnet sind, so daß ein äußerer Umfang des ersten Abschnittes (33) einen größeren axialen Abstand zu dem Bremsbelag (2) aufweist als der zweite Abschnitt (35).

6. Teilbelag-Scheibenbremse nach einem der vorhergehenden Ansprüche, dadurch **gekennzeichnet,** daß das Schutzschild (1) zum äußeren Umfang hin offene radiale Schlitze (36-40) aufweist.

7. Teilbelag-Scheibenbremse nach einem der vorhergehenden Ansprüche, dadurch **gekennzeichnet,** daß der Kolben (6) an der äußeren Mantelfläche (11) eine Nut (42) aufweist, in der die Vorsprünge (14,15,16) einrastbar sind.

8. Teilbelag-Scheibenbremse nach Anspruch 7, dadurch **gekennzeichnet,** daß die Nut (42) zwei sich radial erstreckende umlaufende Nutflächen (43,44) aufweist und daß die erste dem Bremsbelag (2) näher liegende Nutfläche (44) einen kleineren Außendurchmesser (46) als die dem Bremsbelag (2) entferntere Nutfläche (43) aufweist.

9. Teilbelag-Scheibenbremse nach einem der vorhergehenden Ansprüche 1 bis 6, dadurch **gekennzeichnet,** daß der Kolben (6) einen radialen umlaufenden Absatz (47) aufweist, gegen den das Schutzschild (1) anschlagbar ist.

10. Teilbelag-Scheibenbremse nach einem der vorhergehenden Ansprüche, dadurch **gekennzeichnet,** daß das Schutzschild (1) aus Stahlblech hergestellt ist.

11. Teilbelag-Scheibenbremse nach einem der vorhergehenden Ansprüche, dadurch **gekennzeichnet,** daß der Kolben (6) eine Fase (49) zur Führung bei der Montage des Schutzschildes (1) aufweist.

12. Schutzschild für eine Teilbelag-Scheibenbremse nach den Ansprüchen 1 bis 6.

## Claims

1. A spot-type disc brake including a housing (4) and at least one piston (6), on the end (10) of which projecting from the housing (4) and making catch at a brake pad (2) a protective shield (1) is abutting on the piston's peripheral surface (11), the said protective shield (1) being of disc-shaped design and including two axial end surfaces (3, 5) facing the brake pad (2) and the housing (4) and one radially inward peripheral surface (7) facing the piston (6), wherein one end portion of an elastic pleated bellows (13) is arranged on the piston's peripheral surface (11) and another end portion (12) is arranged on the housing (4), and wherein the protective shield (1) is furnished on its peripheral surface (7) with one or more radially inwardly extending projections (14, 15, 16) which permit to clamp the protective shield (1) on the peripheral surface (11) of the piston (6),
**characterised** in that the protective shield (1) comprises a respective opening (17, 18, 19) radially outwardly above the projection or the projections (14, 15, 16), respectively.

2. A spot-type disc brake as claimed in claim 1,
**characterised** in that the respective opening (17, 18, 19) is an oblong hole (17, 18, 19) extending in circumferential direction (20) so that the projection (14, 15, 16) is arranged at a web (27, 28, 29) on an inner periphery of the protective shield (1), the said web extending in circumferential direction (20).

3. A spot-type disc brake as claimed in claim 1 or 2,
**characterised** in that the respective opening (17, 18, 19) has a smaller distance (21, 22, 23) from the radially inward peripheral surface (7) than from a radially outward peripheral surface (8) of the protective shield (1).

4. A spot-type disc brake as claimed in any one of the preceding claims,
**characterised** in that the projections (14, 15, 16) of the protective shield (1) are distributed evenly over the periphery.

5. A spot-type disc brake as claimed in any one of the preceding claims,
**characterised** in that the protective shield (1) is provided with a first and a second portion (33, 35) which are arranged at an angle to each other so that an outward periphery of the first portion (33) is at a larger axial distance from the brake pad (2) than the second portion (35).

6. A spot-type disc brake as claimed in any one of the preceding claims,
**characterised** in that the protective shield (1) is provided with radial slots (36 to 40) which are open towards the outer periphery.

7. A spot-type disc brake as claimed in any one of the preceding claims,
**characterised** in that the piston (6) contains a groove (42) at its outward peripheral surface (11) into which the projections (14, 15, 16) can engage.

8. A spot-type disc brake as claimed in claim 7,
**characterised** in that the groove (42) includes two radially extending circumferential groove surfaces (43, 44), and in that the first groove surface (44) that is closer to the brake pad (2) has a smaller external diameter (46) than the groove surface (43) disposed farther away from the brake pad (2).

9. A spot-type disc brake as claimed in any one of the preceding claims 1 to 6,
**characterised** in that the piston (6) comprises a radial circumferential step (47) against which the protective shield (1) is abuttable.

10. A spot-type disc brake as claimed in any one of the preceding claims,
**characterised** in that the protective shield (1) is made of sheet steel.

11. A spot-type disc brake as claimed in any one of the preceding claims,
**characterised** in that the piston (6) includes a chamfer (49) for guiding during the assembly of the protective shield (1).

12. A protective shield for a spot-type disc brake as claimed in claims 1 to 6.

## Revendications

1. Frein à disque à garniture partielle, comprenant un boîtier (4), au moins un piston (6) et un écran de protection (1) qui vient en prise sur la surface cylindrique (11) du piston à l'extrémité (10) de ce dernier qui fait saillie hors du boîtier (4) et qui vient agir sur une garniture de frein (2), l'écran de protection (1) étant réalisé en forme de disque et comportant deux surfaces frontales, faisant face axialement à la garniture de frein (2) et au boîtier (4), et une surface périphérique radialement intérieure (7) qui fait face au piston (6), tandis qu'une section d'extrémité d'un manchon pliable élastique (13) est disposée sur la surface cylindrique (11) du piston et une autre section d'extrémité (12) est disposée sur le boîtier (4), et que l'écran de protection (1) comporte sur sa surface périphérique (7) une ou plusieurs parties en saillie (14, 15, 16) qui s'étendent radialement vers l'intérieur et au moyen desquelles l'écran de protection peut être calé sur la surface cylindrique (11) du piston (6), caractérisé en ce qu'en une position située radialement vers l'extérieur au-delà de la partie en salle ou de chaque partie en saillie (14, 15, 16), l'écran de protection (1) comporte, pour chacune, une ouverture (17, 18, 19).

2. Frein à disque à garniture partielle suivant la revendication 1, caractérisé en ce que chaque ouverture (17, 18, 19) est un trou en forme de boutonnière (17, 18, 19) qui s'étend dans la direction circonférentielle (20), de sorte que la partie en saillie (14, 15, 16) est disposée sur un pont (27, 28, 29) qui s'étend suivant la direction circonférentielle (20) et sur la périphérie interne de l'écran de protection (1).

3. Frein à disque à garniture partielle suivant l'une des revendications 1 et 2, caractérisé en ce que chaque ouverture (17, 18, 19) est située à une distance (21, 22, 23) plus faible vis-à-vis de la surface périphérique radialement intérieure (7) de l'écran de protection (1) que vis-à-vis de la surface périphérique radialement extérieure (8) de ce dernier.

4. Frein à disque à garniture partielle suivant l'une des revendications précédentes, caractérisé en ce que les parties en saillie( 14, 15, 16) de l'écran de protection (1) sont disposées d'une manière uniformément répartie sur le contour.

5. Frein à disque à garniture partielle suivant l'une des revendications précédentes, caractérisé en ce que l'écran de protection (1) comporte une première section (33) et une seconde section (35) qui sont disposées d'une manière coudée l'une vis-à-vis de l'autre, d'une façon telle que le contour extérieur de la première section (33) est situé à une distance axiale de la garniture de frein (2) qui est plus grande que ne l'est la seconde section (35).

6. Frein à disque à garniture partielle suivant l'une des revendications précédentes, caractérisé en ce que l'écran de protection (1) comporte des fentes radiales (36, 40) débouchant à l'endroit du contour extérieur.

7. Frein à disque à garniture partielle suivant l'une des revendications précédentes, caractérisé en ce que, sur sa surface cylindrique extérieure (11), le piston (6) comporte une gorge (42) dans laquelle les parties en saillie (14, 15, 16) peuvent être emboîtées par enclenchement.

8. Frein à disque à garniture partielle suivant la revendication 7, caractérisé en ce que la gorge (42) comporte deux surfaces circonférentielles de gorge (43, 44) qui s'étendent radialement et en ce que la première surface de gorge (44), située plus près de la garniture de frein (2), a un diamètre extérieur (46) plus petit que celui de la surface de gorge (43) plus éloignée de la garniture de frein (2).

9. Frein à disque à garniture partielle suivant l'une des revendications précédentes 1 à 6, caractérisé en ce que le piston (6) comporte un épaulement circonférentiel radial (47) contre lequel l'écran de protection (1) peut être placé en butée.

10. Frein à disque à garniture partielle suivant l'une des revendications précédentes, caractérisé en ce que l'écran de protection (1) est réalisé à partir d'une tôle d'acier.

11. Frein à disque à garniture partielle suivant l'une des revendications précédentes, caractérisé en ce que le piston (6) comporte un bord abattu (49) permettant le guidage lors du montage de l'écran de protection (1).

12. Ecran de protection pour frein à disque à garniture partielle suivant l'une des revendications 1 à 6.
